Europäisches Patentamt

European Patent Office

Office européen des brevets

(11) Veröffentlichungsnummer: **0 294 637**
**A2**

(12) **EUROPÄISCHE PATENTANMELDUNG**

(21) Anmeldenummer: **88108182.2**

(22) Anmeldetag: **21.05.88**

(51) Int. Cl.⁴: **F02D 9/02 , F02B 19/12**

(30) Priorität: **06.06.87 DE 3719000**

(43) Veröffentlichungstag der Anmeldung:
**14.12.88 Patentblatt 88/50**

(84) Benannte Vertragsstaaten:
**DE ES FR IT**

(71) Anmelder: **VOLKSWAGEN AKTIENGESELLSCHAFT**

**D-3180 Wolfsburg(DE)**

(72) Erfinder: **Müller, Eckart, Dr.**
**Borkumer Strasse 26**
**D-3170 Gifhorn(DE)**

(74) Vertreter: **Werner, Hartmut et al**
**c/o Volkswagenwerk AG, Patentwesen**
**Postfach**
**D-3180 Wolfsburg(DE)**

(54) **Diesel-Brennkraftmaschine.**

(57) Es wird eine nach dem Dieselverfahren arbeitende Hubkolben-Brennkraftmaschine für Fahrzeuge, insbesondere Personenkraftfahrzeuge, vorgeschlagen, die einen in jedem Zylinder oberhalb des Kolbens gebildeten Hauptbrennraum und einen mit diesem durch einen Überströmkanal verbundenen Nebenbrennraum aufweist, der als im Zylinderkopf gehaltene Kammer ausgebildet ist. Bei derartigen Kammerdieselmotoren soll zur Verringerung des Verbrennungsgeräusches und zur Verbesserung des Anspringverhaltens bei tiefen Umgebungstemperaturen sowie zur Reduzierung des Motorschüttelns im Leerlauf das Verdichtungsverhältnis der Brennkraftmaschine auf Werte > 23, vorzugsweise 25 bis 27, angehoben werden und gleichzeitig eine während des Betriebes mit geringer Last und/oder ohne Last (Leerlauf) nach Überschreiten einer vorgegebenen Grenztemperatur der Brennkraftmaschine zuschaltbare Vorrichtung zur wenigstens teilweisen Drosselung der angesaugten Luft vorgesehen werden. Darüberhinaus soll das Verhältnis des Volumens der Nebenkammer zum gesamten Kompressionsvolumen auf Werte > 0,55 angehoben und der Beginn der Kraftstoffeinspritzung in Richtung auf eine spätere Einspritzung verschoben werden.

## Diesel-Brennkraftmaschine

Die Erfindung bezieht sich auf eine nach dem Dieselverfahren arbeitende Hubkolben-Brennkraftmaschine für Fahrzeuge, insbesondere Personenkraftfahrzeuge, gemäß dem Oberbegriff des Patentanspruchs 1.

Als Nachteile heutiger, mit unterteilten Brennräumen ausgerüsteter PKW- Dieselmotoren (Kammerdieselmotoren) gegenüber herkömmlichen Ottomotoren werden das relativ laute Verbrennungsgeräusch, insbesondere das Nageln bei kaltem Motor, das schlechte Anspringen bei tiefen Umgebungstemperaturen, das Motorschütteln, insbesondere im Leerlauf, und Zündaussetzer bei Betrieb in größeren Höhen, insbesondere bei Einsatz schlechter Kraftstoffqualitäten mit niedrigen Cetanzahlen, genannt.

Die der Erfindung zugrundeliegende Aufgabe besteht daher darin, die Diesel-Brennkraftmaschinen der im Oberbegriff des Patentanspruchs angegebenen Art bezüglich des Verbrennungsgeräusches, des Kaltstartes, der Emissionen und des Laufverhaltens in großen Höhen zu verbessern. Darüberhinaus soll die Empfindlichkeit gegenüber schlechten Kraftstoffqualitäten verringert und das Schütteln im Leerlauf weitgehend vermieden werden.

Die Lösung dieser Aufgabe ergibt sich gemäß dem Kennzeichen des Patentanspruchs 1. Durch die erfindungsgemäße Anhebung des Verdichtungsverhältnisses auf Werte zwischen etwa 25 und 27 - bei Wirbelkammerdieselmotoren sind heute z.B. Verdichtungsverhältnisse von 20 - 23 üblich - wird die Kompressionsendtemperatur und der Verdichtungsenddruck spürbar gesteigert. Dies führt zu kürzeren Zündverzügen und damit zu einer weitgehenden Vermeidung des Dieselnagelns. Gleichzeitig wird eine bessere Verarbeitung von Kraftstoffen mit schlechter Zündwilligkeit (kleine Cetanzahl) erreicht und ein sicheres Zündverhalten in großen Höhen sowie ein gutes Startverhalten bei tieferen Umgebungstemperaturen sichergestellt. Darüberhinaus lassen sich durch die Anhebung des Verdichtungsverhältnisses die HC-, Blaurauch- und Weißrauchemissionen nach dem Start der kalten Brennkraftmaschine wesentlich reduzieren. Der mit der Erhöhung des Verdichtungsverhältnisses einhergehende Nachteil der Verstärkung des Schüttelverhaltens im Leerlauf und im niederen Lastbereich wegen der größeren Ungleichförmigkeit des Motorlaufs infolge größerer Verdichtungs- und Expansionsarbeit wird durch die zusätzliche Maßnahme der teilweisen Drosselung der angesaugten Luft behoben und sogar überkompensiert. Allerdings sollte die Drosselung erst nach Erreichen einer vorgegebenen Temperatur der Brennkraftmaschine vorgenommen werden.

Zwar ist es bereits bekannt, zur Vermeidung des Schüttelns von Diesel-Brennkraftmaschinen im Leerlauf die angesaugte Luft zu drosseln (DE-PS 33 01 319). Bei dieser bekannten Brennkraftmaschine wird jedoch eine Erhöhung des Verdichtungsverhältnisses nicht vorgesehen, so daß die durch die Ansaugluftdrosselung bewirkte faktische Reduzierung des Verdichtungsverhältnisses bzw. des Verdichtungsenddruckes sogar eine Verstärkung von einigen der eingangs erwähnten Nachteile zur Folge hat. Das wesentliche Verdienst der vorliegenden Erfindung besteht daher darin, erkannt zu haben, daß erst eine gemeinsame Anwendung sowohl der Ansaugluftdrosselung im Leerlauf als auch der Erhöhung des Verdichtungsverhältnisses eine entscheidende Reduzierung aller angesprochenen Nachteile bewirkt. So macht die gleichzeitige Erhöhung des Verdichtungsverhältnisses auf Werte im Bereich von etwa 25 bis 27 erst die Ansaugluftdrosselung im Leerlauf und niederen Lastbereich und die damit verbundene Reduzierung des Verdichtungsenddruckes ohne Verschlechterung des Zündverhaltens, des Verbrennungsgeräuschs und der Emissionen möglich, während umgekehrt die Ansaugluftdrosselung das durch die Erhöhung des Verdichtungsverhältnisses verstärkte Schütteln behebt bzw. überkompensiert.

Um die möglicherweise infolge dieser Maßnahmen bewirkten Verluste an Mitteldruck im Bereich der Schwarzrauchgrenze weitestgehend zu verhindern, soll gemäß einer Weiterbildung der Erfindung das Verhältnis des Volumens der Nebenkammer zum gesamten Kompressionsvolumen, das z.B. bei Wirbelkammermotoren üblicherweise bei etwa 0,48 - 0,53 liegt, auf Werte > 0,55 gesteigert werden. Gegebenenfalls gleichzeitig der Beginn der Kraftstoffeinspritzung gegenüber konventionellen Brennkraftmaschinen in Richtung auf eine spätere Einspritzung verschoben werden, wobei möglicherweise schon eine Verschiebung um 5° Kurbelwinkel ausreicht.

So kann beispielsweise der Beginn der Kraftstoffeinspritzung, die bei einer herkömmlichen Diesel-Brennkraftmaschine der Kammerbauart mit einem Verdichtungsverhältnis von etwa 22 je nach Drehzahl zwischen 0 und 20° KW vor oT liegt, auf Werte von beispielsweise 5° KW nach bis etwa 15° KW vor oT verschoben werden. Diese Anpassung der Kraftstoffeinspritzung durch Verschiebung auf einen späteren Einspritzzeitpunkt bei gleichzeitiger Erhöhung des Nebenkammervolumens im Verhältnis zum gesamten Kompressionsvolumen bewirkt, daß die Verbrennung des Kraftstoffes in der Brennkraftmaschine etwa bei ähnlichen Volumenverhältnissen stattfindet wie bei den herkömmlichen Brennkraftmaschinen, so daß die dort erreichten guten Mitteldruckwerte an der Schwarzrauchgrenze beibehalten werden können.

Durch die von der Erfindung vorgesehenen Maßnahmen wird eine Diesel-Brennkraftmaschine erreicht, bei der das unangenehme Dieselnageln weitgehend reduziert wird und bei der des weiteren ein besseres Startverhalten bei tieferen Temperaturen mit geringeren Emissionen von Kohlenwasserstoffen, Blau- und Weißrauch sowie ein besserer Rundlauf des Motors nach dem Start erzielt wird. Darüberhinaus ergibt sich ein weitgehend aussetzerfreier Betrieb auch in größeren Höhen und die Möglichkeit, auch Kraftstoffe mit schlechterer Qualität, nämlich niedrigeren Cetanzahlen, zu verwenden. Durch die Erhöhung des Verdichtungsverhältnisses und das damit erreichte bessere Anspringverhalten kann gegebenenfalls auf den bei einer herkömmlichen Diesel-Brennkraftmaschine verwendeten Kaltstartbeschleuniger, der den Einspritzzeitpunkt während des Kaltstartes verstellt, verzichtet werden. Gegebenenfalls kann auch die Leistung des Elektrostarters und die Batteriekapazität reduziert werden. Schließlich wird das Motorschütteln im Leerlauf entscheidend verringert und damit das Komfortverhalten des Fahrzeugs verbessert.

Während die Festlegung des Verdichtungsverhältnisses der Brennkraftmaschine und des Verhältnisses des Nebenkammervolumens zum gesamten Kompressionsvolumen bei der konstruktiven Grundauslegung der Maschine erfolgt, wird die Ansaugluftdrosselung ebenso wie die Kraftstoffeinspritzverstellung durch Ansteuerung von zu diesem Zweck vorgesehenen Bauteilen vorgenommen. So ist zum Zwecke der Ansaugluftdrosselung eine in der Ansaugleitung angeordnete Drosselklappe vorgesehen, die zweckmäßigerweise durch einen von einem Steuergerät ansteuerbaren Z.B. elektrischen oder pneumatischen Stellmotor betätigbar ist. Das Steuergerät steuert beispielsweise den Stellmotor zur Verstellung der Drosselklappe um einen vorgegebenen Stellwinkel an, wenn das Fahrpedal des Fahrzeugs freigegeben ist (Leerlauf) und wenn eine vorgegebene Betriebstemperatur von z. Bsp. 20°C der Brennkraftmaschine erreicht ist und bewirkt eine Rücknahme der Drosselklappenverstellung, wenn das Fahrpedal betätigt wird. Das Steuergerät ist demzufolge mit einem die Temperatur der Brennkraftmaschine an einer charakteristischen Stelle erfassenden Temperaturgeber sowie zweckmäßigerweise mit einem Fahrpedal-Sensor verbunden.

Die gegebenenfalls vorzusehende Kraftstoffeinspritzverstellung kann durch entsprechende Auslegung des Spritzverstellers berücksichtigt werden.

## Ansprüche

1. Nach dem Dieselverfahren arbeitende Hubkolben-Brennkraftmaschine für Fahrzeuge, insbesondere Personenkraftfahrzeuge, mit einem in jedem Zylinder oberhalb des Kolbens gebildeten Hauptbrennraum und mit einem mit diesem durch einen oder mehrere Uberströmkanäle verbundenen Nebenbrennraum, dadurch gekennzeichnet, daß das Verdichtungsverhältnis der Brennkraftmaschine größer als 23 ist, vorzugsweise im Bereich zwischen 25 und 27 liegt, und daß eine während des Betriebes mit geringer Last und/oder ohne Last (Leerlauf) nach Überschreiten einer vorgegebenen Grenztemperatur der Brennkraftmaschine zuschaltbare Vorrichtung zur wenigstens teilweisen Drosselung der angesaugten Luft vorgesehen ist.

2. Brennkraftmaschine nach Anspruch 1, dadurch gekennzeichnet, daß das Verhältnis des Volumens der Nebenkammer zum gesamten Kompressionsvolumen ≥ 0,55 ist.

3. Brennkraftmaschine nach Anspruch 1 oder 2, dadurch gekennzeichnet, daß der Beginn der Kraftstoffeinspritzung gegenüber einer vergleichbaren konvetionellen Brennkraftmaschine in Richtung auf eine spätere Einspritzung verschoben ist.